# FASCICULE DE BREVET EUROPEEN

(11) **EP 2 475 540 B1**
(45) Date de publication et mention de la délivrance du brevet: **06.11.2013**
(21) Numéro de dépôt: 10770846.3
(22) Date de dépôt: 08.09.2010
(51) Int. Cl.: B60K 5/12

(54) **ENSEMBLE DE SUSPENSION D'UN ORGANE GENERATEUR DE VIBRATIONS FIXE A L'INTERIEUR D'UN ESSIEU DE TRAIN ROULANT DE VEHICULE AUTOMOBILE**
AUFHÄNGUNGSANORDNUNG EINES VIBRATIONSERZEUGENDEN ELEMENTS IM INNEREN EINER ACHSE EINES AUTOMOBILFAHRWERKS
ASSEMBLY FOR HANGING A VIBRATION-GENERATING MEMBER ATTACHED INSIDE AN AXLE OF AN AUTOMOBILE RUNNING GEAR

(30) Priorité: 11.09.2009 FR 0956234
(43) Date de publication de la demande: 18.07.2012
(73) Titulaire: Peugeot Citroën Automobiles SA, 78140 Vélizy-Villacoublay (FR)
(72) Inventeur: DUSI, Jacques, F-77220 Gretz Armainvilliers (FR); POUPARD, Dominique, F-92370 Chaville (FR); REMOND, Hervé, F-89140 Plessis St Jean (FR)
(74) Mandataire: Rosenberg, Muriel Sylvie
(86) Numéro de dépôt international: PCT/FR2010/051869
(87) Numéro de publication internationale: WO 2011/030056

(56) Documents cités:
- DE-A1- 3 202 256
- DE-A1- 4 307 999
- DE-A1- 19 710 091
- DE-A1- 19 802 805
- FR-A- 895 171
- FR-A1- 2 504 864
- JP-A- 2001 097 050

## Description

L'invention concerne un ensemble de suspension d'un organe générateur de vibrations fixé à l'intérieur d'un essieu de train roulant de véhicule, notamment de véhicule automobile.

Elle s'applique plus particulièrement, mais pas exclusivement, à un essieu de train arrière de véhicule automobile hybride supportant un groupe motopropulseur comportant une machine électrique de traction.

Le terme essieu est généralement utilisé pour définir une pièce de liaison transversale reliant les roues d'un véhicule. Cette pièce de liaison transversale est également appelée traverse. L'essieu est équipé de diverses pièces de liaison au sol habituellement présente dans un train roulant d'un véhicule automobile : il supporte notamment des bras de suspension liant les roues au véhicule. L'essieu est relié à la caisse du véhicule de façon connue par des moyens de fixation telle que des articulations de type pivot.

Dans la présente invention, l'essieu est agencé pour supporter, en plus des pièces de liaisons au sol évoquées ci-dessus, un organe moteur, générateur de vibrations, lui-même monté suspendu à l'intérieur de l'essieu.

L'organe moteur peut être un moteur thermique ou une machine électrique de traction et plus généralement tout organe générateur de vibrations, vibrations qui devront être filtrées pour empêcher leur propagation vers l'habitacle. Ces vibrations sont générées notamment par les acyclismes, bien connus dans les moteurs thermiques, mais qui existent aussi dans les machines électriques développant des puissances importantes et, notamment dans les machines électriques utilisées pour la traction des véhicules. Ces vibrations, combinées à celles générées par les suspensions des roues, sont transmises à la caisse du véhicule et sont sources d'inconfort pour les occupants du véhicule.

On connaît notamment du document FR 2 837 754, une architecture de suspension d'un groupe motopropulseur dans une caisse de véhicule automobile.

On se référera utilement à ce document pour comprendre la problématique des suspensions des moteurs et pour se familiariser avec le vocabulaire qui sera utilisé dans la présente description.

Les deux principaux types d'architecture de suspension moteur sont : les suspensions dites « pendulées », utilisées notamment par le constructeur automobile PSA Peugeot Citroën ; et les suspensions dites « posées », utilisée notamment par le constructeur automobile Toyota.

Le choix du type d'architecture de suspension est dicté notamment par le type d'organe moteur utilisé : les modes de suspension générés par l'organe moteur et les efforts dus au poids de l'organe moteur et à son couple, ainsi qu'à l'implantation souhaitée de l'organe moteur dans le véhicule.

Dans le cas d'une machine électrique, l'architecture dite pendulaire, est difficile à implanter et sans intérêt du fait que la machine électrique ne génère pas d'effet dit de « pilon » comme c'est le cas avec un moteur thermique standard.

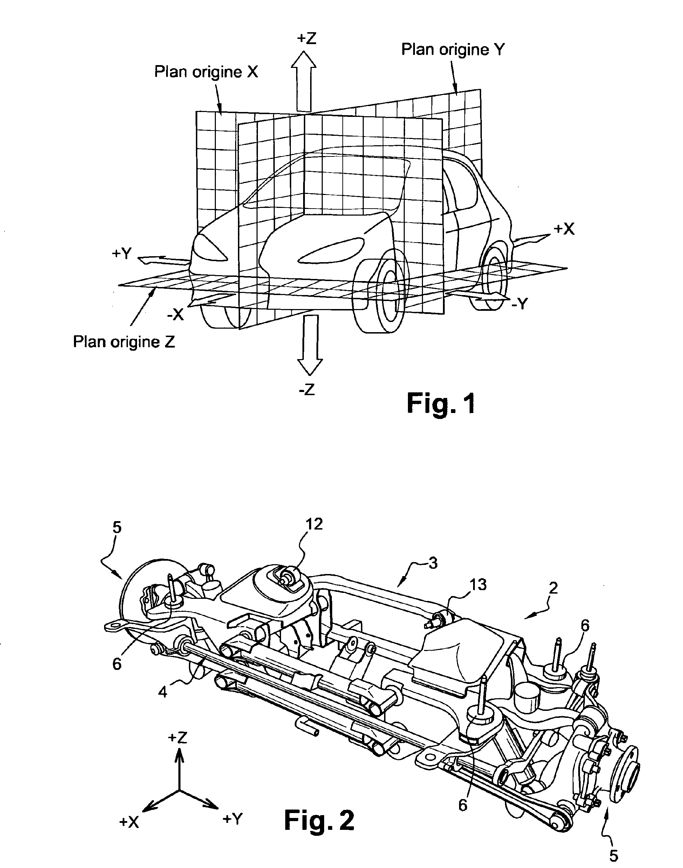

L'architecture dite posée, implique la conception de pièces qui doivent supporter les efforts, dus au poids de la machine, ainsi qu'à son couple, suivant une seule et même direction suivant l'axe Z, en considérant le référentiel tridimensionnel X Y Z illustré à la figure 1.

Ce référentiel sera utilisé dans toute la description qui suit pour décrire dans l'espace, l'essieu et les éléments porteurs de la machine électrique selon l'invention, avec pour convention :
- l'axe X, orienté de l'avant vers l'arrière du véhicule 1 ;
- l'axe Y, orienté du côté gauche du véhicule 1 vers la droite du véhicule 1 (en regardant le véhicule de face, face à l'avant du véhicule 1) ; et
- l'axe Z, orienté de bas en haut.

Cette architecture implique que les six modes de suspension, énumérés dans le document FR 2 837 754, sont couplés entre eux et sont difficilement « paramétrables ».

Le document FR 895 171 A décrit un ensemble de suspension selon le préambule de la revendication 1.

Aucune de ces deux architectures n'est satisfaisante pour répondre à la double contrainte liée à l'implantation d'une machine électrique au coeur d'un train roulant lui-même suspendu.

L'invention vise à remédier à cet inconvénient en proposant une architecture nouvelle dite « en diagonale » permettant de gérer les modes propres à la suspension du train ainsi que les modes propres à la suspension de la machine électrique et ce, de manière découplée.

Elle a donc pour objet un ensemble de suspension d'un organe générateur de vibrations selon la revendication 1.

Selon une caractéristique, la diagonale est sensiblement centrée sur l'axe Y passant par le centre de gravité de l'organe pour équilibrer les efforts dans les éléments de fixation antivibratoire.

Dans un mode de réalisation, l'essieu comporte un ensemble d'éléments tubulaires définissant une cage de forme générale parallélépipédique pour l'organe générateur de vibrations ; les éléments de fixation antivibratoire fixant respectivement, de manière souple, l'organe générateur de vibrations sur certains éléments tubulaires, appelés éléments tubulaires porteur.

Selon une caractéristique de ce mode de réalisation, chaque élément de fixation antivibratoire comporte un bras dont une première extrémité est fixée sur l'organe générateur de vibrations et dont la deuxième extrémité est munie d'un perçage apte à recevoir une articulation de type pivot.

Selon une autre caractéristique, ladite articulation comporte une chape fixement solidaire de l'élément tubulaire porteur ; l'axe de la chape coopérant avec le perçage de la deuxième extrémité du bras par l'intermédiaire d'un matériau filtrant de type élastomère logé dans ledit perçage.

Selon une autre caractéristique, la première extrémité du bras du troisième élément antivibratoire définit une plaque de fixation s'étendant suivant l'axe X et dans lequel la deuxième extrémité s'étend perpendiculairement à la plaque selon l'axe Y ; l'axe du perçage s'étendant selon la l'axe X.

Selon une autre caractéristique, la plaque se prolonge selon l'axe X, en saillie de la machine électrique, pour définir un palier disposé en regard de la sortie de la machine électrique ; ledit palier étant apte à recevoir à rotation un arbre de sortie de la machine électrique.

L'invention sera mieux comprise à la lecture de la description qui va suivre, donnée uniquement à titre d'exemple non limitatif et faite en se référant aux dessins annexés sur lesquels :
- la figure 1, déjà introduite, est un référentiel tridimensionnel utilisé pour la description dans l'espace de l'essieu et des éléments porteurs de la machine électrique, selon l'invention ;
- la figure 2 est une vue en perspective d'un train complet selon l'invention, représenté sans l'organe moteur ;
- la figure 3 est une vue en perspective de l'essieu seul, selon l'invention ;
- la figure 4 est une vue en perspective d'une machine électrique couplée à un couplé à un boîtier intégrant un réducteur de vitesse et un différentiel ;
- les figures 5 et 6 représentent des vues en perspective de l'essieu supportant la machine électrique de la figure 4, suivant respectivement l'axe X et l'axe Y ;
- les figures 7 et 8 représentent des vues en perspective de la machine électrique de la figure 4 équipée de ses éléments de fixation, suivant respectivement l'axe X et l'axe Y ; et
- les figures 9 et 10 représentent respectivement un même exemple d'implantation selon des vues de face, suivant l'axe X, et de côté, suivant l'axe Y, de l'essieu selon l'invention équipé de la machine électrique.

Sur les figures, les mêmes éléments sont désignés par les mêmes références numériques.

Dans la suite de la description, les caractéristiques et fonctions bien connues de l'homme du métier ne seront pas décrites en détail.

La figure 2 représente un train 2, par exemple un train arrière de véhicule automobile.

Ce train 2 comporte de manière classique, un essieu 3, une barre antiroulis 4, des éléments de fixation des roues du véhicule 1 et autres éléments de liaison au sol non détaillés ici, regroupés sous la référence numérique 5 (les roues ne sont pas représentées sur cette figure) ainsi que les fixations 6 du train 2 sur la caisse du véhicule 1

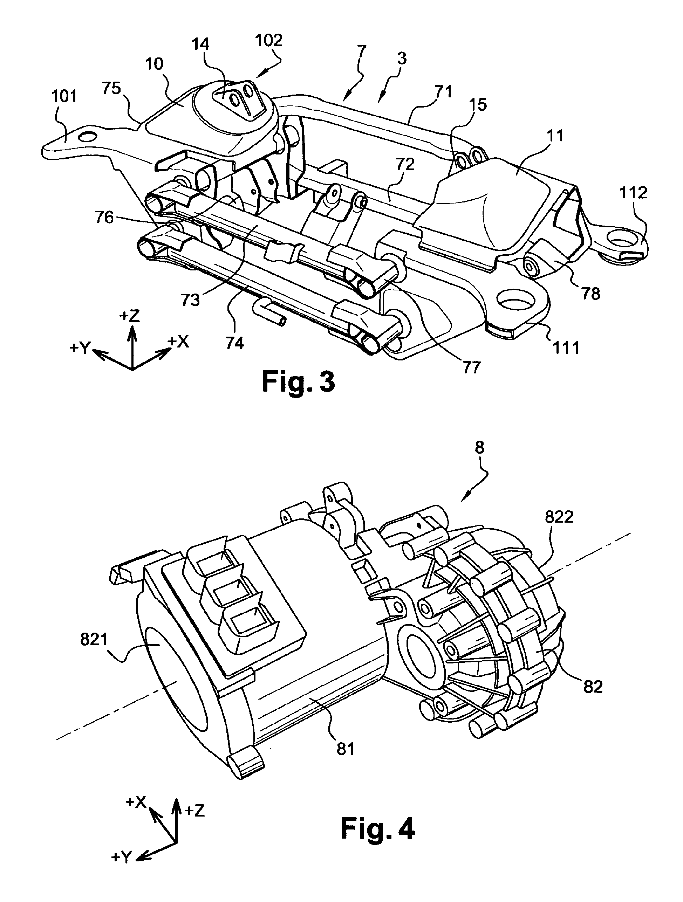

La figure 3 représente l'essieu 3 seul. C'est un essieu de type mécano-soudé. Il est formé d'un assemblage 7 d'éléments tubulaires soudés entre eux, et de deux sous-ensembles 10 et 11, symétriques par rapport à l'axe longitudinal suivant X, formant plaques de fixation pour l'ensemble de suspension gauche 12 et droit 13 par l'intermédiaire de chapes 14 et 15, également soudées sur l'assemblage d'éléments tubulaires 7. L'essieu 3 comporte également quatre excroissances de tôle formant cornes 101, 102, 111 et 112, disposées sensiblement aux quatre angles de l'essieu 3 et qui sont aptes à recevoir les dispositifs de fixation 6 de l'essieu 3 sur la caisse du véhicule 1.

Cet essieu 3 assure à lui seul la fonction d'une traverse déformable apte à absorber les efforts de torsion entre les roues.

Dans l'exemple décrit, huit éléments tubulaires 71 à 78 - dont six 71-75 et 77 sont de section droite circulaire - sont assemblés entre eux de manière à constituer une carcasse de forme générale parallélépipédique, définissant un réceptacle ou cage, pour un ensemble ou organe moteur 8 et notamment une machine électrique 81 et ses réducteur et différentiel associés tels qu'illustré à la figure 4. Le réducteur et le différentiel sont logés dans un même boîtier 82.

Cet ensemble sera désigné par la suite, pour simplifier, par machine électrique 8.

L'organe moteur est dans l'exemple décrit une machine électrique de traction d'environ 20 kW et d'un poids d'environ 60 kg.

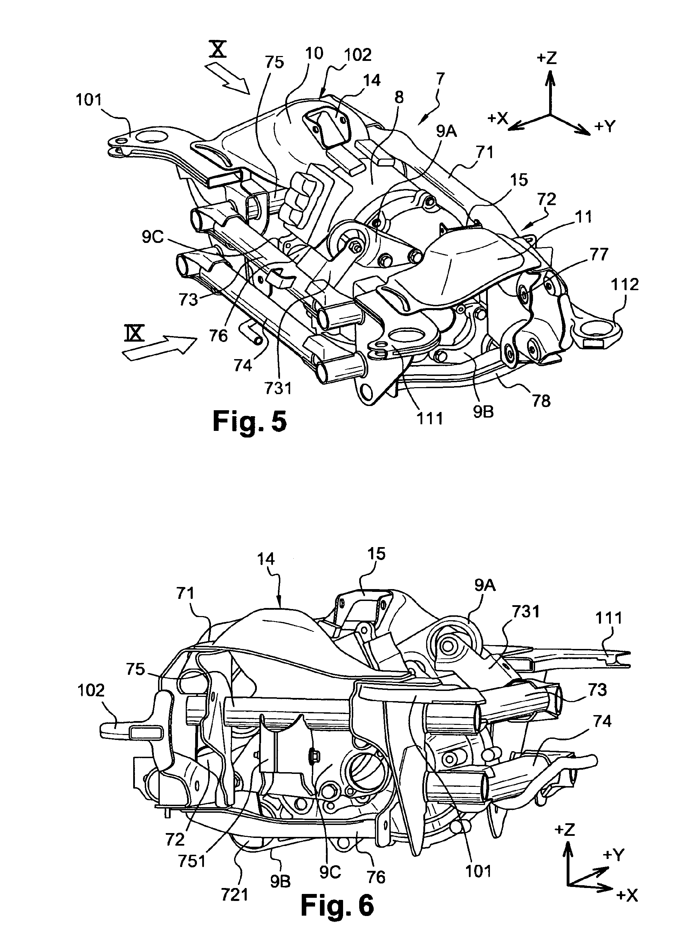

Les figures 5 et 6 représentent l'essieu 3 supportant la machine électrique 8 suivant deux angles de vue différents : la figure 5 est une vue suivant l'axe X et la figure 6 est une vue suivant l'axe Y. La machine électrique 8 est fixée à l'intérieur de l'essieu 3 et plus précisément à l'intérieur de la cage formée par les éléments tubulaires 71 à 78. La machine électrique 8 est fixée en étant suspendue mécaniquement à l'assemblage tubulaire 7 par trois éléments de fixation antivibratoire 9A, 9B et 9C de manière à définir un système de suspension isostatique.

Ces trois éléments de fixation 9A, 9B et 9C sont implantés précisément pour répondre à la double contrainte évoquée dans le préambule de la présente description, à savoir, optimiser le positionnement de la machine électrique 8 à l'intérieur de l'essieu 3 pour satisfaire, à la fois, l'isostatisme de la suspension et les deux niveaux de filtration suivants :
- filtration des vibrations générés par les roues et remontant de l'essieu 3 vers la caisse du véhicule 1, et
- filtration des vibrations de la machine électrique 8, suspendue à l'intérieur de l'essieu 3.

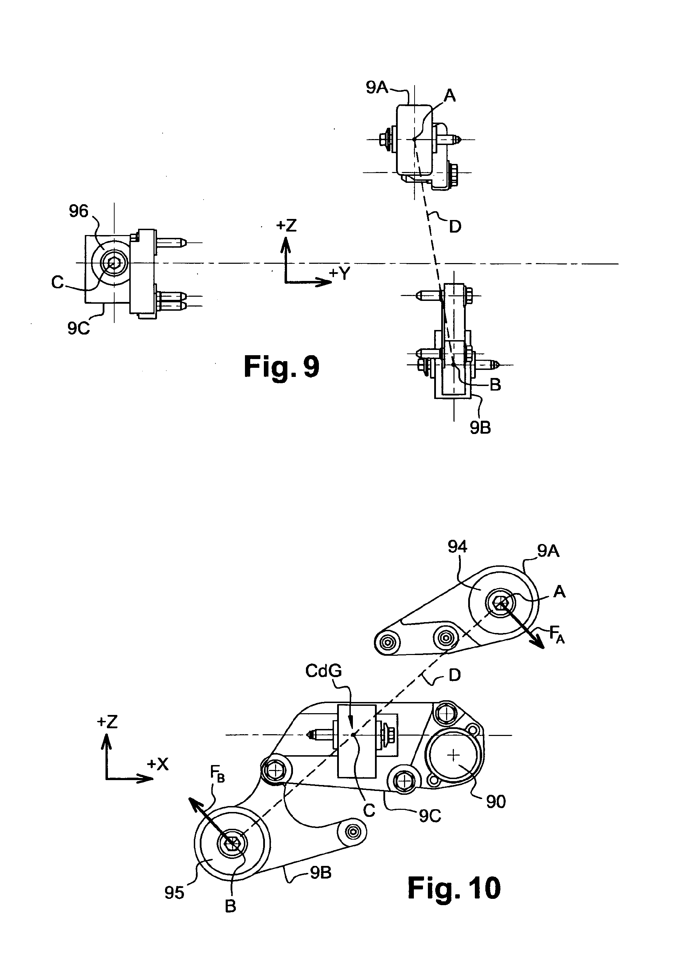

Parmi ces trois éléments de fixation 9A, 9B et 9C, on distingue deux éléments de fixation 9A et 9B qui, en considérant la figure 9, sont à droite de la figure.

Le troisième élément de fixation 9C est à gauche sur la figure 9. Les trois éléments de fixations 9A, 9B et 9C ne se trouvent pas dans le même plan horizontal XY.

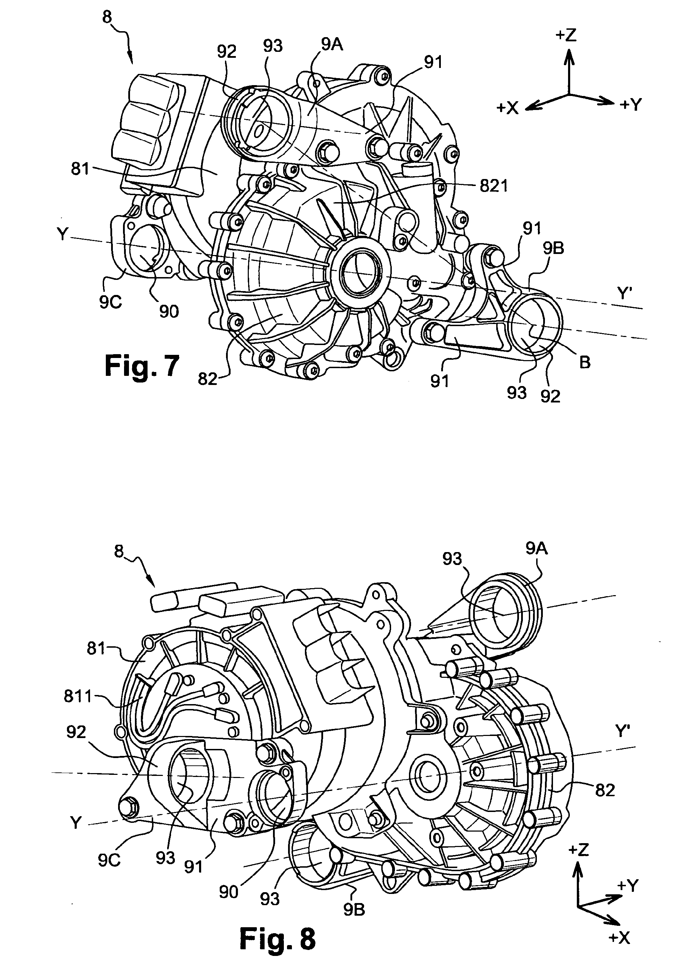

On a représenté sur les figures 7 et 8, la machine électrique 8 seule équipée uniquement des éléments de fixation 9A, 9B et 9C selon sensiblement les mêmes angles de vue que ceux des figures 5 et 6.

Les premier et deuxième éléments de fixation 9A, 9B se présentent sous la forme de pattes ou bras de fixation. Une première extrémité 91 du bras est fixée sur la machine électrique 8, ou plus exactement sur la face externe, ou face terminale 822, du boîtier réducteur-différentiel 82, qui prolonge, suivant l'axe Y, la machine électrique 81: Le bras 9A, 9B est fixé sur la face externe 822 par au moins deux vis de fixation. La deuxième extrémité 92 du bras 9A, 9B est fixée sur un des éléments tubulaires, appelé élément tubulaire porteur, par des articulations de type pivot, comportant un matériau filtrant les vibrations 94, 95, de type élastomère (figures 9 et 10).

Plus précisément, la deuxième extrémité 92 du bras 9A, 9B est munie d'un perçage 93 apte à recevoir le matériau élastomère 94, 95 et l'axe d'une chape 731, 751. La chape 751 est fixée solidairement à l'un des éléments tubulaires porteur 73, 75.

Les éléments de fixation 9A, 9B définissent ainsi des éléments de fixation antivibratoire aptes à filtrer les modes de suspension.

Ces deux éléments de fixation 9A et 9B assurent principalement à eux seuls le maintien de la machine électrique 8 dans l'essieu 3.

En référence aux figures 9 et 10, qui représentent respectivement l'implantation des trois éléments de fixation 9A, 9B, 9C sur l'essieu 3, suivant deux angles de vue différents, on constate que les éléments de fixation 9A et 9B sont alignés suivant un segment de droite appelé diagonale D. Cette diagonale D part d'un point A correspondant au centre de l'élément de fixation antivibratoire 94 disposé à la deuxième extrémité 92 du bras 9A. Elle arrive en un point B correspondant au centre de l'élément de fixation antivibratoire 95 disposé à la deuxième extrémité 92 du bras 9B.

Pour répartir de façon optimale les efforts sur les éléments de fixation 9A, 9B, cette diagonale D passe par une droite, sur l'axe horizontal Y, reliant un point C correspondant au centre de l'élément de fixation 9C et le centre de gravité CdG de la machine électrique 8 (la machine électrique 81 et le boîtier réducteur-différentiel 82 dans l'exemple décrit). La longueur du segment AB, donc de la diagonale D, doit être suffisante pour limiter les efforts au niveau des pièces de liaison : éléments de fixation 9A, 9B, élément de fixation antivibratoire 94, 95, articulations, etc., ceci afin de permettre la conception et la fabrication de pièces peu coûteuses, simples et devant résister à peu d'effort ; l'effort dépendant du couple développé par la machine électrique 8. A titre d'exemple, la longueur du segment AB est d'environ 500 mm pour une machine électrique de 20 kW développant un couple maximum de 200 N/m.

La diagonale D « reprend en Z » le poids de la machine électrique 8. Cet effort, dont la direction est suivant l'axe Z, se répartit sur les deux éléments de fixation 9A et 9B.

Avantageusement, les axes des éléments de fixation 9A et 9B, passant respectivement par les points A et B, sont orientés orthogonalement au plan XZ.

Avantageusement, la filtration apportée par les matériaux élastomère 94 et 95 qui sont logés dans les éléments de fixation 9A et 9B, suit la direction du couple de la machine. La direction du couple de la machine est représentée, sur la figure 10, par deux flèches FA et FB, dont les origines partent respectivement des centres A et B des éléments de fixation 9A et 9B. Ces flèches FA et FB sont représentatives des forces de réaction du couple de la machine 8 sur les éléments de fixation 9A et 9B. Pour des raisons de dispersion dans les tolérances de fabrication, les axes des éléments de fixation 9A et 9B sont, dans la pratique, orientés « sensiblement » orthogonalement à la diagonale D.

Le troisième élément de fixation 9C, ou de fixation gauche, est disposé sur l'axe horizontal Y qui passe par le centre de gravité CdG de la machine électrique 8.

Avec une telle disposition, l'élément de fixation 9C ne supporte pratiquement pas, ni le poids ni le couple de la machine électrique 8. On dit que l'élément de fixation 9C ne voit pas le couple de la machine électrique.

Avantageusement, l'axe de l'élément de fixation 9C est orienté suivant l'axe X de telle sorte que la filtration apportée par cet élément soit effective suivant la direction du couple, ceci afin d'économiser un joint habituellement utilisé pour atténuer les effets du type « shudder » : effets qui se retrouvent sur tous les trains arrière de véhicules automobiles et qui se traduisent, en roulage, par une oscillation du train arrière suivant l'axe Y du véhicule.

On profitera donc naturellement de ce troisième élément de fixation 9C pour fixer également l'arbre de sortie de la machine électrique 8 (correspondant à la sortie du différentiel), symbolisé sur les figures 7 et 8 par son axe YY', comme décrit ci-après.

L'élément de fixation 9C se distingue par sa forme et son implantation des deux autres éléments de fixation 9A et 9B décrits ci-dessus. En reprenant le terme de bras utilisé pour définir les éléments de fixation antivibratoire 9A et 9B, la première extrémité du bras 9C se présente sous la forme d'une plaque s'étendant suivant l'axe X et dont la base 91 est fixée par trois vis de fixation sur la face latérale externe, ou face terminale 811, de la machine électrique 8. La deuxième extrémité du bras 9C comporte une extension 92 s'étendant perpendiculairement à la base 91 vers l'extérieur de la machine électrique 8 suivant la direction Y. Cette extension est munie d'un perçage 93 apte à recevoir une articulation de type pivot comportant un matériau 96 filtrant les vibrations, de type élastomère, et l'axe d'une chape 751. La chape 751 est fixée solidairement à l'élément tubulaire porteur 75.

L'élément de fixation 9C et les éléments de fixations 9A, 9B définissent ainsi des éléments de fixation antivibratoire participant tous au filtrage des modes de suspension.

La base 91 de l'élément de fixation 9C se prolonge suivant l'axe X, en saillie de la machine électrique 8 pour présenter un autre perçage 90 venant en regard de la sortie de la machine électrique 8 (correspondant à la sortie du boîtier réducteur-différentiel 82) et définir ainsi un palier pour l'arbre de sortie YY'.

Ainsi, c'est le même élément de fixation 9C qui participe à la suspension isostatique de la machine électrique 8 et au maintien de l'arbre de sortie YY'.

L'implantation qui vient d'être écrite est particulièrement adaptée pour pouvoir gérer les modes de suspension de la machine électrique dans un train ayant lui-même ses propres modes de suspension.

En imposant des raideurs déterminées en Z et en X pour les deux éléments de fixation 9A et 9B, appartenant à la même diagonale D, ainsi qu'une raideur déterminée pour le troisième élément de fixation 9C, aligné avec le centre de gravite CdG, il est relativement simple de définir un schéma modal prenant en compte les six modes de suspension d'un organe moteur dans un contexte d'un train roulant de véhicule automobile.

D'autres modes de réalisation sont possibles. On peut, par exemple, intervertir le positionnement droit gauche des éléments de fixations.

Comme déjà décrit ci-dessus, l'ensemble de suspension selon l'invention peut également être utilisé pour fixer un moteur à combustion thermique ou tout organe générateur de vibrations que l'on cherchera à filtrer.

Il peut également s'appliquer à un train avant du véhicule.

## Revendications

1. Ensemble de suspension d'un organe générateur de vibrations (8) fixé à l'intérieur d'un essieu (3) de train roulant (2) de véhicule (1), notamment de véhicule automobile, ledit organe (8) étant fixé à l'essieu (3) par au moins un premier (9A), un deuxième (9B) et un troisième (9C) éléments de fixation antivibratoire, les trois éléments de fixation (9A, 9B, 9C) n'appartenant pas au même plan horizontal XY, lesdits éléments de fixation (9A, 9B, 9C) assurant une suspension isostatique de l'organe (8) dans l'essieu (3), et dans lequel les premier et deuxième éléments de fixation (9A et 9B) sont disposés à distance l'un de l'autre et alignés sur une diagonale (D) reliant le centre (A) du premier élément de fixation (9A) et le centre (B) du deuxième éléments de fixation (9B) en passant par une droite, sur l'axe horizontal Y, reliant le centre (C) du troisième élément de fixation (9C) et le centre de gravité (CdG) de l'organe (8) ; le troisième élément de fixation (9C), distant des premier et deuxième éléments de fixation (9A, 9B), ne passant pas par cette diagonale (D) ; le centre (C) du troisième élément de fixation (9C) et le centre de gravité (CdG) de l'organe (8) passant par le même plan horizontal XY **caractérisé en ce que** les premier et deuxième éléments de fixation antivibratoire (9A, 9B) sont placés sur l'une (822) des parties terminales de l'organe génerateur de vibrations (8) s'étendant selon la direction générale Y, et le troisième élément de fixation antivibratoire (9C) est placé sur l'autre partie terminale (821) selon la même direction générale Y.

2. Ensemble de suspension selon la revendication précédente, dans lequel la diagonale (D) est sensiblement centrée sur l'axe Y passant par le centre de gravité (CdG) pour équilibrer les efforts dans les éléments de fixation antivibratoire (9A, 9B, 9C).

3. Ensemble de suspension selon l'une des revendications précédentes, dans lequel l'essieu (3) comporte un ensemble (7) d'éléments tubulaires (71-78) définissant une cage de forme générale parallélépipédique pour l'organe générateur de vibrations (8), les éléments de fixation antivibratoire (9A, 9B, 9C) fixant respectivement, de manière souple, l'organe générateur de vibrations (8). sur certains éléments tubulaires, appelés éléments tubulaires porteur (73, 72, 75).

4. Ensemble de suspension selon la revendication précédente, dans lequel chaque élément de fixation antivibratoire (9A, 9B, 9C) comporte un bras dont une première extrémité (91) est fixée sur l'organe générateur de vibrations (8) et dont la deuxième extrémité (92) est munie d'un perçage (93) apte à recevoir une articulation de type pivot.

5. Ensemble de suspension selon la revendication précédente dans lequel ladite articulation comporte une chape (731, 721, 751) fixement solidaire de l'élément tubulaire porteur (73, 72, 75), l'axe de la chape (731, 721, 751) coopérant avec le perçage (93) de la deuxième extrémité (92) du bras (9A, 9B, 9C) par l'intermédiaire d'un matériau filtrant de type élastomère (94, 95, 96) logé dans ledit perçage (93).

6. Ensemble de suspension selon l'une de revendications 4 à 5, dans lequel la première extrémité (91) du bras du troisième élément antivibratoire (9C) définit une plaque de fixation s'étendant suivant l'axe X et dans lequel la deuxième extrémité (92) s'étend perpendiculairement à la plaque (91) selon l'axe Y ; l'axe du perçage (93) s'étendant selon la l'axe X.

7. Ensemble de suspension selon la revendication précédente, dans lequel la plaque (91) se prolonge selon l'axe X, en saillie d'une machine électrique (8), pour définir un palier (90) disposé en regard de la sortie de la machine électrique (8) ; ledit palier (90) étant apte à recevoir à rotation un arbre de sortie (YY') de la machine électrique (8).

## Patentansprüche

1. Aufhängungsanordnung eines vibrationserzeugenden Elements (8), das im Inneren einer Achse (3) eines Fahrwerks (2) eines Fahrzeugs (1), insbesondere eines Automobils, befestigt ist, wobei das Element (8) an der Achse (3) durch mindestens ein erstes (9A), ein zweites (9B) und ein drittes (9C) Vibrationsschutz-Befestigungselement befestigt ist, wobei die drei Befestigungselemente (9A, 9B, 9C) nicht zu derselben horizontalen Ebene XY gehören, wobei die Befestigungselemente (9A, 9B, 9C) eine isostatische Aufhängung des Elements (8) in der Achse (3) sicherstellen, und wobei das erste und das zweite Befestigungselement (9A und 9B) voneinander entfernt angeordnet und auf einer Diagonale (D) ausgerichtet sind, die die Mitte (A) des ersten Befestigungselements (9A) und die Mitte (B) des zweiten Befestigungselements (9B) verbindet und durch eine Gerade auf der horizontalen Achse Y durchgeht, die die Mitte (10) des dritten Befestigungselements (9C) und den Schwerpunkt (CdG) des Elements (8) verbindet; wobei das dritte Befestigungselement (9C), das von dem ersten und dem zweiten Befestigungselement (9A, 9B) entfernt ist, nicht durch diese Diagonale (D) durchgeht; wobei die Mitte (C) des dritten Befestigungselements (9C) und der Schwerpunkt (CdG) des Elements (8) durch dieselbe horizontale Ebene XY durchgehen, **dadurch gekennzeichnet, dass** das erste und das zweite Vibrationsschutz-Befestigungselement (9A, 9B) auf einem (822) der Endteile des vibrationserzeugenden Elements (8) platziert sind, das sich entlang der allgemeinen Richtung Y erstreckt, und das dritte Vibrationsschutz-Befestigungselement (9C) auf dem anderen Endteil (821) entlang der selben allgemeinen Richtung Y platziert ist.

2. Aufhängungsanordnung nach dem vorhergehenden Anspruch, wobei die Diagonale (D) im Wesentlichen auf der Achse Y, die durch den Schwerpunkt (CdG) durchgeht, zentriert ist, um die Kräfte in den Vibrationsschutz-Befestigungselementen (9A, 9B, 9C) auszugleichen.

3. Aufhängungsanordnung nach einem der vorhergehenden Ansprüche, wobei die Achse (3) eine Baugruppe (7) röhrenförmiger Elemente (71 bis 78) aufweist, die einen Käfig mit allgemeiner Parallelepipedform für das vibrationserzeugende Element (8) definieren, wobei die Vibrationsschutz-Befestigungselemente (9A, 9B, 9C) jeweils elastisch das vibrationserzeugende Element (8) auf bestimmten röhrenförmigen Elementen, die tragende röhrenförmige Elemente (73, 72, 75) genannt werden, befestigen.

4. Aufhängungsanordnung nach dem vorhergehenden Anspruch, wobei jedes Vibrationsschutz-Befestigungselement (9A, 9B, 9C) einen Arm aufweist, von dem ein erstes Ende (91) auf dem vibrationserzeugenden Element (8) befestigt ist, und von dem das zweite Ende (92) mit einer Bohrung (93) versehen ist, die geeignet ist, um ein Gelenk des Typs Schwenkzapfen aufzunehmen.

5. Aufhängungsanordnung nach dem vorhergehenden Anspruch, wobei das Gelenk eine Gabel (731, 721, 751) aufweist, die fest mit dem tragenden röhrenförmigen Element (73, 72, 75) verbunden ist, wobei die Achse der Gabel (731, 721, 751) mit der Bohrung (93) des zweiten Endes (92) des Arms (9A, 9B, 9C) über einen filternden Werkstoff des Typs Elastomer (94, 95, 96), der in der Bohrung (93) untergebracht ist, zusammenwirkt.

6. Aufhängungsanordnung nach einem der Ansprüche 4 bis 5, bei der das erste Ende (91) des Arms des dritten Vibrationsschutzelements (9C) eine Befestigungsplatte definiert, die sich entlang der Achse X erstreckt, und wobei sich das zweite Ende (92) senkrecht zu der Platte (91) entlang der Achse Y erstreckt, wobei sich die Achse der Bohrung (93) entlang der Achse X erstreckt.

7. Aufhängungsanordnung nach dem vorhergehenden Anspruch, bei der sich die Platte (91) entlang der Achse X von einem Elektromotor (8) vorstehend erstreckt, um ein Lager (90) zu definieren, das gegenüber dem Ausgang des Elektromotors (8) angeordnet ist; wobei das Lager (90) geeignet ist, um die Drehung einer Ausgangswelle (YY') des Elektromotors (8) aufzunehmen.

## Claims

1. A suspension assembly of a vibration-generating member (8) fixed to the interior of an axle (3) of a running gear (2) of a vehicle (1), in particular of a motor vehicle, the said member (8) being fixed to the axle (3) by at least a first (9A), a second (9B) and a third (9C) antivibratory fixing element, the three fixing elements (9A, 9B, 9C) not belonging to the same horizontal plane XY, the said fixing elements (9A, 9B, 9C) ensuring an isostatic suspension of the member (8) in the axle (3), and in which the first and second fixing elements (9A and 9B) are arranged at a distance from one another and aligned on a diagonal (D) connecting the centre (A) of the first fixing element (9A) and the centre (B) of the second fixing element (9B) by passing through a straight line, on the horizontal axis Y, connecting the centre (C) of the third fixing element (9C) and the centre of gravity (CdG) of the member (8); the third fixing element (9C), remote from the first and second fixing elements (9A, 9B), not passing through this diagonal (D); the centre (C) of the third fixing element (9C) and the centre of gravity (CdG) of the member (8) passing through the same horizontal plane XY, **characterized in that** the first and second antivibratory fixing elements (9A, 9B) are placed on one (822) of the terminal parts of the vibration-generating member (8) extending along the general direction Y and the third antivibratory fixing element (9C) is placed on the other terminal part (821) along the same general direction Y.

2. The suspension assembly according to the preceding claim, in which the diagonal (D) is substantially centred on the axis Y passing through the centre of gravity (CdG) to balance the stresses in the antivibratory fixing elements (9A, 9B, 9C).

3. The suspension assembly according to one of the preceding claims, in which the axle (3) comprises an assembly (7) of tubular elements (71-78) defining a cage of general parallelepipedic shape for the vibration-generating member (8), the antivibratory fixing elements (9A, 9B, 9C) fixing respectively, in a flexible manner, the vibration-generating member (8) on certain tubular elements, designated carrier tubular elements (73, 72, 75).

4. The suspension assembly according to the preceding claim, in which each antivibratory fixing element (9A, 9B, 9C) comprises an arm, a first end (91) of which is fixed on the vibration-generating member (8), and the second end (92) of which is provided with a drilled hole (93) able to receive a joint of the pivot type.

5. The suspension assembly according to the preceding claim, in which the said joint comprises a yoke (731, 721, 751) fixedly integral with the carrier tubular element (73, 72, 75), the axis of the yoke (731, 721, 751) cooperating with the drilled hole (93) of the second end (92) of the arm (9A, 9B, 9C) by means of a filtering material of the elastomer type (94, 95, 96) housed in the said drilled hole (93).

6. The suspension assembly according to one of Claims 4 to 5, in which the first end (91) of the arm of the third antivibratory element (9C) defines a fixing plate extending along the axis X and in which the second end (92) extends perpendicularly to the plate (91) along the axis Y; the axis of the drilled hole (93) extending along the axis X.

7. The suspension assembly according to the preceding claim, in which the plate (91) extends along the axis X, projecting from an electric machine (8), to define a bearing (90) arranged facing the output of the electric machine (8); the said bearing (90) being able to receive in rotation an output shaft (YY') of the electric machine (8).
